# EUROPEAN PATENT APPLICATION

(11) **EP 4 261 199 A1**
(43) Date of publication of application: **18.10.2023**
(21) Application number: 21944771.1
(22) Date of filing: 17.08.2021
(51) Int. Cl.: C05B 7/00, C05G 3/40, C01B 25/41

(54) **SLOW-DISSOLVING COMPOUND FERTILIZER CONTAINING POTASSIUM POLYPHOSPHATE, PREPARATION METHOD THEREFOR, AND APPLICATION THEREOF**

(30) Priority: 11.06.2021 CN 202110650784
(71) Applicant: Yunnan Addiphos Technology Co., Ltd., Kunming, Yunnan 650000 (CN)
(72) Inventor: LI, Jingmin, Kunming, Yunnan 650000 (CN); LI, Wen, Kunming, Yunnan 650000 (CN)
(74) Representative: Porta & Consulenti Associati S.p.A.
(86) International application number: PCT/CN2021/113107
(87) International publication number: WO 2022/257269

(57) **Abstract**

The present disclosure relates to the technical field of water-soluble compound fertilizers, and provides a potassium polyphosphate slow-soluble compound fertilizer and a preparation method and application thereof. The preparation method of a potassium polyphosphate slow-soluble compound fertilizer includes the following steps: mixing a solution of a potassium source with phosphoric acid evenly to obtain a neutralization solution; subjecting the neutralization solution to dehydration polymerization by heating to obtain a molten glass body; and conducting shock cooling, secondary cooling, crushing, and sieving on the molten glass body in sequence to obtain a solid potassium polyphosphate slow-soluble compound fertilizer; where the potassium source includes potassium carbonate and/or potassium hydroxide; the phosphoric acid and the potassium carbonate are at a mass ratio of (7-9):(6-8); the phosphoric acid and the potassium hydroxide are at a mass ratio of (7-9):(5-7); and the phosphoric acid has a mass fraction of 80% to 90%. In the present disclosure, specific raw materials are subjected to the dehydration polymerization by heating at specific material ratio and temperature. The shock cooling, flaking, cooling, and crushing are conducted in sequence to obtain the potassium polyphosphate slow-soluble compound fertilizer. The compound fertilizer has specific components of phosphorus and potassium each accounting for 50%, and shows an excellent performance.

## Description

### CROSS REFERENCE TO RELATED APPLICATION

The present disclosure claims the priority to Chinese Patent Application No. 202110650784.2, titled "POTASSIUM POLYPHOSPHATE SLOW-SOLUBLE COMPOUND FERTILIZER, PREPARATION METHOD AND APPLICATION THEREOF", filed with China National Intellectual Property Administration (CNIPA) on June 11, 2021, which is incorporated herein by reference in its entirety.

### TECHNICAL FIELD

The present disclosure relates to the technical field of water-soluble compound fertilizers, and in particular relates to a potassium polyphosphate slow-soluble compound fertilizer and a preparation method and application thereof.

### BACKGROUND

The existing sources of water-soluble fertilizers in China include potassium, nitrogen, and phosphorus fertilizers. The potassium fertilizer includes potassium phosphate, potassium chloride, and potassium nitrate. The phosphate fertilizer includes ammonium phosphate and potassium phosphate. The nitrogen fertilizer includes ammonium bicarbonate, ammonium nitrate, and urea. However, the above fertilizer sources have high leaching properties, are difficult to remain in the soil for a long time, and show a low utilization rate. Moreover, repeated application may increase labors and costs.

In recent years, potassium tripolyphosphate and potassium pyrophosphate have also been used as low solubility fertilizer sources due to their chelating properties. However, potassium tripolyphosphate and potassium pyrophosphate have strong hygroscopicity. Moreover, solutions of the potassium tripolyphosphate and potassium pyrophosphate have a pH value of greater than 10, which is not conducive to soil. In order to meet the weak alkaline requirements of the soil, potassium tripolyphosphate and potassium pyrophosphate need to be added with 18% to 25% of potassium dihydrogen phosphate to adjust the pH value. However, potassium dihydrogen phosphate has highly low chelating properties. After adding the potassium dihydrogen phosphate, the chelating properties of potassium tripolyphosphate and potassium pyrophosphate are significantly weakened, and the ratio of N:P:K can be affected. Moreover, the potassium tripolyphosphate and potassium pyrophosphate are easy to absorb moisture, and are prone to agglomeration when being used with nitrogen fertilizers, thus affecting the application.

In order to improve fertilizer efficiency, high phosphorus and potassium sources such as potassium tripolyphosphate and potassium pyrophosphate are also used as phosphorus and potassium fertilizer sources. The potassium tripolyphosphate and potassium pyrophosphate are easy to absorb moisture and agglomerate, which are inconvenient to use. Moreover, the solutions of the potassium tripolyphosphate and potassium pyrophosphate have a pH value of about 10, which is not conducive to soil. In order to meet the weak alkaline requirements of the soil, potassium tripolyphosphate and potassium pyrophosphate need to be added with 18% to 25% of potassium dihydrogen phosphate to adjust the pH value. The potassium tripolyphosphate, potassium pyrophosphate, and potassium dihydrogen phosphate have easy moisture absorption, and are prone to agglomeration when being used with nitrogen fertilizers, thereby affecting the application. Therefore, compound fertilizers are mostly made into aqueous solutions and shipped in packaging barrels, which may increase the cost of transportation and packaging.

### SUMMARY

The present disclosure provides a preparation method of a potassium polyphosphate slow-soluble compound fertilizer, including the following steps:
(a) mixing a solution of a potassium source with phosphoric acid evenly to obtain a neutralization solution;
(b) subjecting the neutralization solution to dehydration polymerization by heating to obtain a molten glass body; and conducting shock cooling, secondary cooling, crushing, and sieving on the molten glass body in sequence to obtain a solid potassium polyphosphate slow-soluble compound fertilizer; where
   the potassium source includes potassium carbonate and/or potassium hydroxide;
   the phosphoric acid and the potassium carbonate are at a mass ratio of (7-9):(6-8). The phosphoric acid refers to a phosphoric acid solution, and the potassium carbonate is a solid.

Optionally, the phosphoric acid and the potassium carbonate are at a mass ratio of (7.5-8.5):(6.5-7.5).

In one or more examples, the phosphoric acid and the potassium carbonate are at a mass ratio of (7.8-8.2):(7.1-7.4).

The phosphoric acid and the potassium hydroxide are at a mass ratio of (7-9):(5-7). The phosphoric acid refers to a phosphoric acid solution, and the potassium hydroxide is a solid.

Optionally, the phosphoric acid and the potassium hydroxide are at a mass ratio of (7.5-8.5):(5.5-6.6).

In one or more examples, the phosphoric acid and the potassium hydroxide are at a mass ratio of (7.8-8.2):(5.8-6.2).
the phosphoric acid has a mass fraction of 80% to 90%, preferably 85%.

The neutralization process is an exothermic process. An order of feeding can be potassium source and then phosphoric acid, or phosphoric acid and then potassium source, or both being fed at the same time.

Optionally, in step (a), the potassium source is dissolved in water to form an aqueous solution with a mass fraction of 45% to 50%, and then phosphoric acid with a mass fraction of 85% is added into the aqueous solution, to obtain the neutralization solution. With this feeding method, the exothermic process is relatively gentle.

Optionally, the neutralization solution has a mass concentration of 50% to 60%.

In a typical implementation, the neutralization solution has a mass concentration of 55%.

In step (b), the dehydration polymerization by heating can be realized via the following two approaches:

### (1) Dehydration polymerization two-step method:

The neutralization solution is subjected to centrifugation/pressure atomization to remove excessive moisture, and dried to obtain a mixed dry powder of potassium dihydrogen phosphate (KH₂PO₄) and dipotassium hydrogen phosphate (K₂HPO₄). The mixed dry powder is conveyed by a screw to a fixed rectangular cellar-type polymerization furnace for heating, and then subjected to secondary dehydration polymerization to obtain a molten glass body. The glass body is led to a double-roller shock cooling machine for shock cooling and flaking to obtain a solid glass body sheet. The solid glass body sheet is subjected to secondary cooling by a cooling spiral, and then crushed by a hammer crusher. A resulting crushed product is shaped and classified by a circular vibrating sieve to obtain the potassium polyphosphate slow-soluble compound fertilizer.

In the centrifugal/pressure atomization, a rotating speed of centrifugal atomization and a pressure of pressure atomization depend on a liquid spray volume, a diameter, and a tower height of a spray tower. A drying gas of the spray tower has an inlet temperature controlled at 250°C to 280°C, and an outlet temperature controlled at 180°C to 220°C.

### (2) Dehydration polymerization one-step method:

The neutralization solution is directly pumped to a fixed rectangular glass-ceramic kiln-type polymerization furnace for heating, and subjected to dehydration polymerization to obtain a molten glass body. The glass body is led to a double-roller shock cooling machine for shock cooling and flaking to obtain a solid glass body sheet. The solid glass body sheet is subjected to secondary cooling by a cooling spiral, and then crushed by a hammer crusher. A resulting crushed product is shaped and classified by a circular vibrating sieve to obtain the potassium polyphosphate slow-soluble compound fertilizer.

The potassium polyphosphate slow-soluble compound fertilizer is a solid potassium polyphosphate product obtained by shock cooling high-temperature-polymerized molten glass.

Shock cooling the molten glass body can increase a dissolution rate and a dissolution amount of the product at a normal temperature.

In the preparation method of a potassium polyphosphate slow-soluble compound fertilizer provided by the present disclosure, specific raw materials are subjected to the dehydration polymerization by heating at specific material ratio and temperature. The shock cooling, flaking, cooling, and crushing are conducted in sequence to obtain the potassium polyphosphate slow-soluble compound fertilizer. The compound fertilizer has specific components of phosphorus and potassium each accounting for 50%, and shows an excellent performance. The potassium polyphosphate slow-soluble compound fertilizer is a new type of molecular structure, has high phosphorus and potassium without nitrogen, and can be combined with various nitrogen forms for ternary compounding.

Optionally, the dehydration polymerization by heating is conducted at a temperature of 750°C to 850°C, preferably 780°C to 820°C; and the temperature can also be 755°C, 760°C, 765°C, 770°C, 795°C, 800°C, 809°C, 813°C, 825°C, 835°C, 840°C, or 845°C.

Optionally, the heating is conducted until there are 0.02% to 0.1% of water-insoluble matters at 800°C±25°C.

In a typical implementation, the heating is conducted until there are 0.05% of the water-insoluble matters at 800°C±25°C.

Optionally, during the shock cooling, a roller has a cooling speed of 10 rpm to 16 rpm.

Optionally, the molten glass body is quenched to a temperature of 150°C to 250°C, preferably 190°C to 210°C; and the temperature can also be 155°C, 165°C, 175°C, 190°C, 210°C, 222°C, 235°C, or 242°C.

The secondary cooling can avoid damaging a moisture-proof PE inner film bag and scalding packaging personnel when the product is packaged.

Optionally, an obtained quenched molten glass body is subjected to the secondary cooling to 20°C to 70°C, preferably 30°C to 50°C.

The sieving can obtain a particle size required by the users, and avoid generating dust when pouring out the materials to improve a production environment.

The present disclosure further provides a potassium polyphosphate slow-soluble compound fertilizer, prepared by the preparation method.

In the present disclosure, the potassium polyphosphate slow-soluble compound fertilizer has a P₂O₅ content of 50%, a K₂O content of 50%, and a pH value of 8.0 to 8.3. As an agricultural fertilizer source, this compound fertilizer can also be called a binary phosphorus-potassium compound fertilizer with an N-P-K ratio of 0:50:50.

The potassium polyphosphate slow-soluble compound fertilizer is a new compound composed of 4 PO₄ combined in a chain to form a ring or an extremely-long chain. The potassium polyphosphate slow-soluble compound fertilizer has a chemical formula of Kₙ₊₂PₙO₃ₙ₊₁, n>1. In order to make a mass ratio K₂O/P₂O₅=1 to maximize the contents of K₂O and P₂O₅, n is 4, and the chemical formula is: K₄₊₂P₄O_{3×4+1}=K₆P₄O₁₃. From a phase diagram of potassium phosphate between K₂O and P₂O₅, the compound K₆P₄O₁₃ is in a liquid state at 813°C to 1109°C. The chemical formula K₆P₄O₁₃ is formed by polymerization after removing 3 molecules of water from 2K₂HPO₄+2KH₂PO₄, that is, 2K₂HPO₄+2KH₂PO₄=K₆P₄O₁₃+3H₂O.

According to the above chemical reaction formula, it can be calculated that in the K₆P₄O₁₃, the theoretical value of phosphorus pentoxide is: P₂O₅=50.18%, and the theoretical value of potassium oxide is: K₂O=49.82%. For a potassium polyphosphate slow-soluble compound fertilizer product obtained in Example 1, P₂O₅=49.69% was actually measured by using the quinomolybdophosphate copper gravimetric method, and K₂O=49.42% was actually measured by a potassium tetraphenylborate gravimetric technique. The product had a pH value of 8.3, a loss on ignition of 0.01% (800°C±25°C), a water-insoluble substance of 0.05%, no residue, and negligible traces of harmful elements.

Optionally, the potassium polyphosphate slow-soluble compound fertilizer has 49.5% to 50.0% of P₂O₅ in terms of phosphate content, or 49.5% to 50.0% of K₂O in terms of potassium oxide content.

Optionally, in the potassium polyphosphate slow-soluble compound fertilizer, K₂O/P₂O₅=1, K₂O=50%, and P₂O₅=50%. At this ratio, the potassium polyphosphate slow-soluble compound fertilizer has high solubility and a suitable pH value.

Optionally, an aqueous solution with a mass fraction of 1.0% of the potassium polyphosphate slow-soluble compound fertilizer has a pH value of 8.0 to 8.3.

The potassium polyphosphate slow-soluble compound fertilizer has an appropriate pH value. On one hand, the compound fertilizer can better adapt to the weak alkaline requirements of the soil and can improve an acidic state of the soil. On the other hand, the compound fertilizer can release negative ions in the fertilized soil environment, which has an adsorption effect on metal Cd.

Optionally, the potassium polyphosphate slow-soluble compound fertilizer has a solubility of 100 g/100 g of water at 25°C.

The potassium polyphosphate slow-soluble compound fertilizer has desirable water solubility, excellent sprayability, easier absorption by crops, and higher utilization rate of nutrients. Therefore, the compound fertilizer is a well fertilizer source for foliar spraying, drip irrigation, and soilless cultivation.

The potassium polyphosphate slow-soluble compound fertilizer is not hydrolyzed immediately like phosphates (such as tripotassium phosphate, potassium dihydrogen phosphate, and dipotassium hydrogen phosphate) when contacting water. On the contrary, according to a length of each chain of the compound fertilizer, the longest chain breaks first to form KH₂PO₄ and K₂HPO₄ solutions, and then all the chains gradually break to form the KH₂PO₄ and K₂HPO₄ solutions. Subsequently, the potassium dihydrogen phosphate and dipotassium hydrogen phosphate solutions are further hydrolyzed to finally form K⁺ and PO₄³⁻. When being applied, the potassium polyphosphate slow-soluble compound fertilizer is beneficial to the slow absorption of effective elements for crops during the gradual hydrolysis. Accordingly, the potassium polyphosphate slow-soluble compound fertilizer has a slow-dissolving function, which can make nutrients not easy to lose, thus showing a high utilization rate.

For the chelation of phosphates, the chelation of polyphosphates depends on the length of the chain and the pH value. Generally speaking, long-chain polyphosphates have a strong chelating ability for light metal ions, which is enhanced with an increase of the pH value. Short-chain polyphosphates have a strong chelating ability for heavy metal ions, which weakens with the increase of the pH value.

The order of chelating ability is: orthophosphate<triphosphate<diphosphate<polyphosphate. In the present disclosure, the potassium polyphosphate slow-soluble compound fertilizer has an excellent chelating performance, and can complex with most of the metal ions that are sequestered or polluted in the soil to form different complexes (also known as coordination compounds).

When being complexed with alkali metal ions such as Ca²⁺, Mg²⁺, Zn²⁺, Fe²⁺, Mn²⁺, and Cu²⁺, the potassium polyphosphate slow-soluble compound fertilizer can supplement medium and trace minerals required by plants.

In the present disclosure, the potassium polyphosphate slow-soluble compound fertilizer has P:K=50:50, no nitrogen, and high contents of P and K fertilizer sources. Moreover, the compound fertilizer has desirable sprayability and low loss, meets the needs of weakly alkaline soil, and can amend acidic soil; the compound fertilizer is not easy to agglomerate and easy to store and transport. Furthermore, the compound fertilizer also has slow solubility, and can remediate or attenuate heavy metal ion pollution of the soil.

Since there is no nitrogen, the potassium polyphosphate slow-soluble compound fertilizer has excellent compatibility.

The present disclosure further provides application of the potassium polyphosphate slow-soluble compound fertilizer in fertilization.

Optionally, in parts by weight, 10 parts to 90 parts of the potassium polyphosphate slow-soluble compound fertilizer is mixed with 10 parts to 90 parts of the urea.

In one or more embodiments, in parts by weight, 40 parts to 55 parts of the potassium polyphosphate slow-soluble compound fertilizer is mixed with 45 parts to 60 parts of the urea.

In a typical implementation, in mass fraction, 48% of the potassium polyphosphate slow-soluble compound fertilizer is mixed with 52% of the urea to obtain a ternary compound fertilizer with an N-P-K ratio of 24:24:24.

The potassium polyphosphate slow-soluble compound fertilizer and the urea are mixed according to the above ratio for application, such that a ratio of N:P:K=24:24:24 can be achieved. At this time, a fertilizer utilization rate is high while reducing a transportation cost.

Among the various nutrient elements (carbon, hydrogen, oxygen, nitrogen, phosphorus, potassium, calcium, and magnesium) needed by plants, the nitrogen, phosphorus, and potassium are main nutrients needed by plants and the nutrients that have a large amount taken away during harvest. However, there are a small amount of the N, P, and K returned to the soil through residues and roots. Therefore, it is generally necessary to supplement nitrogen, phosphorus, and potassium in the form of artificial fertilizers. In the main fertilizer source of plants, N, P, and K generally represent different ratios in the fertilizer. General plants need N:P:K=1: 1: 1, where N represents nitrogen content in the fertilizer; P represents a content of phosphorus pentoxide (P₂O₅) in the fertilizer; and K represents a content of potassium oxide (K₂O) in the fertilizer. N:P:K=24:24:24 means that the low solubility compound fertilizer has a total content of nitrogen (in N) that is 24%, a total content of phosphorus (in P₂O₅) that is 24%, and a total content of potassium (in K₂O) that is 24%. Therefore, the potassium polyphosphate slow-soluble compound fertilizer is mixed with the urea in a specific ratio, which can avoid a low fertilizer source content generally existing in the water-soluble multi-component compound fertilizers in the current market. Optionally, the potassium polyphosphate slow-soluble compound fertilizer is mixed with at least one of medium and trace elements, organic fertilizers, humic acid, and amino acids for application.

### DETAILED DESCRIPTION OF THE EMBODIMENTS

Technical solutions of the present disclosure will be clearly and completely described below with reference to specific implementations. However, those skilled in the art will understand that the examples described below are merely some rather than all of the examples of the present disclosure, and the examples are only used to illustrate the present disclosure and should not be regarded as limiting the scope of the present disclosure. All other embodiments obtained by those of ordinary skill in the art based on the embodiments of the present disclosure without creative efforts should fall within the protection scope of the present disclosure. If no specific conditions are specified in the examples, the examples will be implemented under conventional conditions or the conditions recommended by the manufacturer. If the reagents or instruments used do not indicate the manufacturer, they are all conventional products that can be commercially available.

One embodiment of the present disclosure provides a preparation method of a potassium polyphosphate slow-soluble compound fertilizer. In the preparation method, specific raw materials are subjected to the dehydration polymerization by heating at specific material ratio and temperature. The shock cooling, flaking, cooling, and crushing are conducted in sequence to obtain the potassium polyphosphate slow-soluble compound fertilizer. The compound fertilizer has specific components of phosphorus and potassium each accounting for 50%, as well as high contents of fertilizer sources, and shows an excellent performance. The potassium polyphosphate slow-soluble compound fertilizer is a new type of molecular structure, has high phosphorus and potassium without nitrogen, and can be combined with various nitrogen forms for ternary compounding.

One embodiment of the present disclosure provides a potassium polyphosphate slow-soluble compound fertilizer of dibasic phosphorus and potassium prepared by the preparation method. The compound fertilizer itself contains negligible metal ions and has certain chelating properties for metal ions. The compound fertilizer can be added with medium elements Ca and Mg as well as trace elements Fe, Mn, and Zn to form a multi-element fertilizer source. In addition, the compound fertilizer also has maximum phosphorus and potassium contents, desirable water solubility, and solubility reaching 100 g/100 g of water. The compound fertilizer has high sprayability, low hydrolysis rate at normal temperature, small leaching loss, and excellent fertilizer efficiency. The compound fertilizer has a pH value of 8.1 to 8.3, which meets the requirement of weak alkaline soil, and can amend acidic soil. The compound fertilizer is not easy to absorb moisture and agglomerate, and can reduce transportation and packaging costs.

One embodiment of the present disclosure provides application of a potassium polyphosphate slow-soluble compound fertilizer without nitrogen. The potassium polyphosphate slow-soluble compound fertilizer is used in combination with urea, and has N=0. In this way, the flexibility of nitrogen component is provided, such that multiple ratios of N can be formed to achieve a match of multiple N amounts. When at N:P:K=1:1:1, there are high contents of P and K fertilizer sources. When the compound fertilizer is matched with the urea, a ratio of N:P:K=24:24:24 can be achieved, which has a high fertilizer utilization rate and can reduce costs.

In the present disclosure, the potassium polyphosphate slow-soluble compound fertilizer has desirable water solubility, and shows a dissolution amount reaching 100 g/100 g of water. The compound fertilizer has low hydrolysis speed, strong chelating performance, and suitable pH value. Moreover, the compound fertilizer is not easy to absorb moisture and agglomerate, is convenient for packaging, storage and transportation, and is convenient to use.

In the present disclosure, the potassium polyphosphate slow-soluble compound fertilizer can avoid the nitro-nitrogen produced by using potassium nitrate, thereby reducing soil hardening caused by fertilization.

Compared with the prior art, the present disclosure has the following beneficial effects:
(1) In the preparation method of a potassium polyphosphate slow-soluble compound fertilizer provided by the present disclosure, specific raw materials are subjected to the dehydration polymerization by heating at specific material ratio and temperature. The shock cooling, flaking, cooling, and crushing are conducted in sequence to obtain the potassium polyphosphate slow-soluble compound fertilizer. The compound fertilizer has P:K=50:50, and shows a slow-dissolving function.
(2) In the present disclosure, the potassium polyphosphate slow-soluble compound fertilizer has a suitable pH value of 8.1 to 8.3, which can meet the needs of weakly alkaline soil and amend acidic soil. The compound fertilizer has no residue, and is not easy to absorb moisture and agglomerate. Moreover, the compound fertilizer has a slow-dissolving function, and can be gradually hydrolyzed. In this way, crops can slowly absorb effective elements, such that the nutrients are not easily lost, showing a high utilization rate.
(3) In the present disclosure, the potassium polyphosphate slow-soluble compound fertilizer has desirable water solubility, and the water solubility can reach 100 g/100 g of water. The compound fertilizer has high sprayability and compatibility, and can be compatible with organic fertilizers, humic acid, and amino acids. The compound fertilizer is not easy to agglomerate, easy to store and transport, and convenient to use.
(4) In the present disclosure, the potassium polyphosphate slow-soluble compound fertilizer has no residue after application and negligible heavy metal contents. Moreover, the compound fertilizer has no residual pollutants or harmful residues, and shows desirable environmental protection conditions, which guarantees the safe growth of crops.
(5) In the present disclosure, the potassium polyphosphate slow-soluble compound fertilizer has slow hydrolysis speed, long fertility retention, and high fertilizer efficiency. When being hydrolyzed, the compound fertilizer is gradually transformed from a straight long chain into a single crystal structure of monopotassium phosphate and dipotassium phosphate. In this way, effective elements are permanently absorbed by the crops. Therefore, the compound fertilizer has low leaching properties, difficult loss of nutrients, high fertilizer utilization rate, and low comprehensive use cost.
(6) In the present disclosure, the potassium polyphosphate slow-soluble compound fertilizer has a desirable chelating performance and can complex with metal ions existing in the soil. As a result, the adverse effects of heavy metals on crops are avoided, thus remediating or attenuating soil pollution. Moreover, the compound fertilizer can also be complexed with the required trace elements to form a water-soluble metal ion complex, so as to supplement the trace elements required by the soil.
(7) In the application of the potassium polyphosphate slow-soluble compound fertilizer provided by the present disclosure in fertilization, the potassium polyphosphate slow-soluble compound fertilizer is used in combination with urea, and has N=0. In this way, the flexibility of nitrogen component is provided, such that multiple ratios of N can be formed to achieve a match of multiple N contents. When at N:P:K=1:1:1, there are high contents of P and K fertilizer sources. When the compound fertilizer is matched with the urea, a ratio of N:P:K=24:24:24 can be achieved, which has a high fertilizer utilization rate and can reduce costs.

### Examples

### Example 1

In this example, a preparation method of a potassium polyphosphate slow-soluble compound fertilizer included the following steps:
(1) 61.22 g of potassium hydroxide with a mass fraction of 98.5% was placed in a 500 ml beaker, and water was added to obtain a potassium hydroxide solution with a mass fraction of 55%; 80.75 g of phosphoric acid with a mass fraction of 85.1% was slowly poured into the beaker containing the potassium hydroxide solution while stirring, and then mixed uniformly to obtain a clear neutralization solution;
(2) the neutralization solution obtained in step (1) was added into a ceramic evaporating dish, placed in a muffle furnace, and then subjected to dehydration polymerization at 800°C for 4 h to obtain a high-temperature melt with a weight loss on ignition of 0.1%; and
(3) the ceramic evaporating dish containing the high-temperature melt was carefully taken out with pliers, the melt was poured on a clean stainless steel plate with a length, width, and height of 500 cm×500 cm×5 cm for shock cooling (a cooling rotating speed of a roller was 10 rpm), to obtain glass shards of uneven thickness; the glass shards were subjected to secondary cooling to 25°C, crushed with a small laboratory mill, and sieved at 60 mesh to obtain 112 g of the potassium polyphosphate slow-soluble compound fertilizer.

The potassium polyphosphate slow-soluble compound fertilizer prepared in Example 1 was formulated into an aqueous solution with a mass fraction of 1.0%, and then its pH value was measured with a pH meter. It was determined that the aqueous solution with a mass fraction of 1.0% of the potassium polyphosphate slow-soluble compound fertilizer prepared in Example 1 had a pH value of 8.3.

The solubility of the potassium polyphosphate slow-soluble compound fertilizer prepared in Example 1 in water at 25°C was measured. It was determined that at 25°C, a maximum of 100 g of the potassium polyphosphate slow-soluble compound fertilizer was dissolved in 100 g of water.

The potassium polyphosphate slow-soluble compound fertilizer prepared in Example 1 was subjected to a moisture absorption test. It was found that the particles/blocks with a particle size of greater than 1 mm were not easy to absorb moisture, while the 60-mesh undersize was easy to absorb moisture.

In the potassium polyphosphate slow-soluble compound fertilizer prepared in Example 1, P₂O₅=49.98% was measured by using the quinomolybdophosphate copper gravimetric method, and K₂O=49.87% was measured by the potassium tetraphenylborate gravimetric technique. Considering the analysis error, in the potassium polyphosphate slow-soluble compound fertilizer prepared in Example 1, P₂O₅=50% was based on the main content of phosphate; K₂O=50% was based on the main content of potassium oxide.

### Example 2

In this example, a preparation method of a potassium polyphosphate slow-soluble compound fertilizer included the following steps:

The steps were basically the same as those in the preparation method of Example 1, the only difference was that the potassium source, potassium hydroxide, was replaced by potassium carbonate (K₂CO₃), with its dosage changed. Step (1) included: 77.26 g of potassium carbonate with a mass fraction of 95.0% was placed in a 500 ml beaker, and water was added to obtain a potassium carbonate solution with a mass fraction of 55%; 80.75 g of phosphoric acid with a mass fraction of 85.1% was slowly poured into the beaker containing the potassium carbonate solution while stirring, and then mixed uniformly to obtain a clear neutralization solution. All the other steps (2), (3), (4), and (5) were the same as those in Example 1.

A same method as that in Example 1 was used for detection, and it was found that basically the same results could be achieved.

### Example 3

In this example, a preparation method of a potassium polyphosphate slow-soluble compound fertilizer included the following steps:
(1) 0.8046 kg of food-grade phosphoric acid with a mass fraction of 85.15% and 0.6091 kg of food-grade potassium hydroxide with a mass fraction of 98.5% were prepared; the potassium hydroxide was dissolved in water to obtain a potassium hydroxide solution with a mass fraction of 55%, and the potassium hydroxide solution was slowly added to the phosphoric acid while stirring, and then neutralized to obtain a clear neutralization solution;
(2) the neutralization solution was added into a fixed cellar-type polymerization furnace, and then subjected to dehydration polymerization at 850°C to obtain a high-temperature melt with a weight loss on ignition of 0.1%; and
(3) when the high-temperature melt was held at 800°C±25°C for a certain period of time, the weight loss on ignition after sampling and analysis was 0.2%; at 850°C±25°C, the heating heat and the amount of neutralization solution were adjusted to reach a balance; the high-temperature melt was put into a water-cooled double-roller shock cooling machine to shock cooling and flaking, where the shock cooling machine adopted a frequency converter to control a rotating speed of 16 rpm to obtain flaked glass; the flaked glass was broken by a spiral at the bottom of a silo of the shock cooling machine, and fed into a cooling spiral; an obtained glass body was cooled to 56°C with the cooling spiral, entered a crushing system, and crushed by a hammer crusher; a resulting crushed product was placed in a three-outlet circular vibrating sieve for sieving, where the number of sieves included: 20 mesh oversize < 1.0%, 100 mesh undersize < 30.0%, so as to obtain the potassium polyphosphate slow-soluble compound fertilizer.

A same method as that in Example 1 was used for detection, and it was found that basically the same results could be achieved.

### Comparative Example 1

In this comparative example, a preparation method of a control product included the following steps:
(1) 50 g of potassium hydroxide with a mass fraction of 98.5% was placed in a 500 ml beaker, and water was added to obtain a potassium hydroxide solution with a mass fraction of 55%; 90 g of phosphoric acid with a mass fraction of 85.1% was slowly poured into the beaker containing the potassium hydroxide solution while stirring, and then mixed uniformly to obtain a clear neutralization solution;
(2) the neutralization solution obtained in step (1) was added into a ceramic evaporating dish, placed in a muffle furnace, and then subjected to dehydration polymerization at 700°C for 4 h to obtain a high-temperature melt; and
(3) the ceramic evaporating dish containing the high-temperature melt was carefully taken out with pliers, the melt was poured on a clean stainless steel plate with a length, width, and height of 500 cm×500 cm×5 cm for natural cooling to 25°C, to obtain glass shards; the glass shards were crushed with a small laboratory mill, and sieved at 60 mesh to obtain the control product.

The control product prepared in this comparative example was formulated into an aqueous solution with a mass fraction of 1.0%, and then its pH value was measured with a pH meter. It was determined that the aqueous solution with a mass fraction of 1.0% of the control product prepared in this comparative example had a pH value of 8.35% and a weight loss on ignition of 1.15%.

The solubility of the control product prepared in this comparative example in water at 25°C was measured. It was determined that at 25°C, a maximum of 119 g of the control product was dissolved in 100 g of water. This showed that the polymerization temperature was low, the weight loss on ignition was high, and the material was not completely subjected to dehydration polymerization.

The control product prepared in this comparative example was subjected to a moisture absorption test. It was found that the particles or blocks with a particle size of greater than 1 mm and the 60-mesh undersize both were easy to absorb moisture.

In the control product prepared in this comparative example, P₂O₅=49.51% was measured by using the quinomolybdophosphate copper gravimetric method, and K₂O=48.79% was measured by the potassium tetraphenylborate gravimetric technique.

### Test Example 1

The potassium polyphosphate slow-soluble compound fertilizer prepared in Example 1 of the present disclosure, as well as commercially available food-grade potassium tripolyphosphate (KTPP), potassium pyrophosphate (KPP), and potassium dihydrogen phosphate (KDP) were tested for complexation value by precipitation titration. The results were shown in Table 1:

**Table 1 Comparison of complexation values of various substances**

| | Potassium polyphosphate | KTPP | KPP | KDP | 40% KTPP + 40% KPP + 20% KDP by mass fraction |
|---|---|---|---|---|---|
| Ca mg/g (titration reagent CaCO₃) | 175 | 32 | 18 | 0 | 20 |
| Mg mg/g (titration reagent MgCl₂) | 375 | 60 | 62.5 | 17.4 | 52.4 |
| Zn mg/g (titration reagent ZnSO₄) | 228 | 70 | 104 | 3 | 70.2 |
| Fe mg/g (titration reagent FeSO₄) | 150 | 50 | 66.1 | 1.8 | 46.8 |
| Cu mg/g (titration reagent FeSO₄) | 430 | 113.1 | 39.7 | 2 | 61.5 |
| Mn mg/g (titration reagent MnCl₂) | 220 | 77.7 | 83.4 | 2.2 | 65.6 |

It was seen from Table 1 that the potassium polyphosphate slow-soluble compound fertilizer prepared in Example 1 of the present disclosure had excellent complexing properties with metal ions.

### Test Example 2

The potassium polyphosphate slow-soluble compound fertilizer prepared in Example 1 of the present disclosure was analyzed for harmful components using a LehmaₙSEPAL inductively-coupled plasma (ICP) emission spectrometer. The results were shown in Table 2:

**Table 2 Analysis results of harmful substances in potassium polyphosphate slow-soluble compound fertilizer**

| Harmful substance | Content (ppm) |
|---|---|
| Arsenic (As) | 0.63 |
| Fluoride (F) | 5.3 |
| Heavy metals (Pb) | 5.13 |
| Lead (Pb) | 1.0 |
| Mercury (Hg) | 0.1 |
| Cadmium (Cd) | 0.1 |
| Aluminum (Al) | 2.4 |
| Copper (Cu) | 0.1 |
| Nickel (Ni) | 0.1 |
| Chromium (Cr) | 0.1 |
| Zinc (Zn) | 0.02 |
| Manganese (Mg) | 0.5 |

Table 2 showed that the potassium polyphosphate slow-soluble compound fertilizer prepared by the present disclosure had extremely little harmful substance contents, which could be ignored.

Although the present disclosure has been illustrated and described with specific examples, it should be understood that the above examples are only used to illustrate the technical solution of the present disclosure, not to limit it. Those skilled in the art should understand that without departing from the spirit and scope of the present disclosure, the technical solutions described in the foregoing examples can be modified, or some or all of the technical features can be equivalently substituted. However, these modifications or substitutions do not make the essence of the corresponding technical solutions depart from the scope of the technical solutions of the examples of the present disclosure. It is therefore intended to cover within the appended claims all such substitutions and modifications that are within the scope of the present disclosure.

## Claims

1. A preparation method of a potassium polyphosphate slow-soluble compound fertilizer, comprising the following steps:
(a) mixing a solution of a potassium source with phosphoric acid evenly to obtain a neutralization solution;
(b) subjecting the neutralization solution to dehydration polymerization by heating to obtain a molten glass body; and conducting shock cooling, secondary cooling, crushing, and sieving on the molten glass body in sequence to obtain a solid potassium polyphosphate slow-soluble compound fertilizer; wherein
the potassium source comprises potassium carbonate and/or potassium hydroxide;
the phosphoric acid and the potassium carbonate are at a mass ratio of (7-9):(6-8);
the phosphoric acid and the potassium hydroxide are at a mass ratio of (7-9):(5-7); and
the phosphoric acid has a mass fraction of 80% to 90%, preferably 85%.

2. The preparation method according to claim 1, wherein the neutralization solution is subjected to the dehydration polymerization by heating at 750°C to 850°C, preferably 780°C to 820°C; and
preferably, the heating is conducted until there are 0.02% to 0.1% of water-insoluble matters at 800°C±25°C.

3. The preparation method according to claim 1, wherein during the shock cooling, a roller has a cooling speed of 10 rpm to 16 rpm.

4. The preparation method according to claim 1, wherein the molten glass body is quenched to 150°C to 250°C, preferably 190°C to 210°C.

5. The preparation method according to claim 1, wherein an obtained quenched molten glass body is subjected to the secondary cooling to 20°C to 70°C, preferably 30°C to 50°C.

6. A potassium polyphosphate slow-soluble compound fertilizer, prepared by the preparation method according to any one of claims 1 to 5; wherein
preferably, the potassium polyphosphate slow-soluble compound fertilizer has 49.5% to 50.0% of P₂O₅ in terms of a phosphate content, or 49.5% to 50.0% of K₂O in terms of a potassium oxide content;
preferably, an aqueous solution with a mass fraction of 1.0% of the potassium polyphosphate slow-soluble compound fertilizer has a pH value of 8.0 to 8.3; and
preferably, the potassium polyphosphate slow-soluble compound fertilizer has a solubility of 100 g/100 g of water at 25°C.

7. An application of the potassium polyphosphate slow-soluble compound fertilizer according to claim 6 in liquid fertilization.

8. The application according to claim 7, wherein during the fertilization, the potassium polyphosphate slow-soluble compound fertilizer is mixed with urea.

9. The application according to claim 8, wherein in parts by weight, 10 parts to 90 parts of the potassium polyphosphate slow-soluble compound fertilizer is mixed with 10 parts to 90 parts of the urea.

10. The application according to claim 8, wherein in mass fraction, 48% of the potassium polyphosphate slow-soluble compound fertilizer is mixed with 52% of the urea to obtain a ternary compound fertilizer with an N-P-K ratio of 24:24:24.
